Europäisches Patentamt

European Patent Office

Office européen des brevets

(19)

(11) Publication number: **0 101 323**
**B1**

(12) # EUROPEAN PATENT SPECIFICATION

(45) Date of publication of patent specification: **22.02.89**

(51) Int. Cl.⁴: **F 16 K 1/22,** F 16 K 47/02

(21) Application number: **83304748.3**

(22) Date of filing: **17.08.83**

(54) Rotary control valves.

(30) Priority: **18.08.82 GB 8223727**

(43) Date of publication of application:
**22.02.84 Bulletin 84/08**

(45) Publication of the grant of the patent:
**22.02.89 Bulletin 89/08**

(84) Designated Contracting States:
**AT BE CH DE FR GB IT LI NL SE**

(56) References cited:
**EP-A-0 021 029**
**EP-A-0 029 110**
**DE-A-2 359 717**
**DE-C- 37 481**
**FR-A-2 244 951**
**FR-A-2 310 502**
**GB-A-1 375 300**
**US-A- 965 322**
**US-A-3 960 177**

(73) Proprietor: **KENT PROCESS CONTROL LIMITED**
**ARMYTAGE ROAD INDUSTRIAL ESTATE**
**ARMYTAGE ROAD**
**BRIGHOUSE WEST YORKSHIRE HD6 1QF (GB)**

(72) Inventor: **Singleton, Edward Whiteley**
**'Daisy Mount' Lightcliffe Road**
**Brighouse West Yorkshire (GB)**

(74) Representative: **Atkinson, Peter Birch**
**WHEATLEY & MACKENZIE Scottish Life House**
**Bridge Street**
**Manchester M3 3DP (GB)**

Courier Press, Leamington Spa, England.

**Description**

The present invention relates to rotary control valves.

The conventional butterfly valve used for regulating the flow of fluids embodies a circular shaped rotatable element called a disc or vane which is fixed diametrically to an operating shaft supported within a valve body having an internal bore equal to that of the rotatable element.

Valves of this conventional design provide a low cost and generally satisfactory means of regulating the flow of fluids provided that the pressure differential across the rotatable element in relation to the supply pressure is sufficiently small for the hydrodynamic forces and noise generated within the valve passages to be lower than the acceptable or standard limits. However, there are many practical cases in which the noise generated by a conventional butterfly valve would be unacceptable.

The generation of noise is mainly due to cavitation in the case of liquids and to aerodynamic and sonic velocity effects in the case of gases.

Conventional butterfly valves can be subject to severe hydrodynamic forces which result in the application of a peak torque on the operating shaft when the valve approaches the fully open position. In order to maintain accurate control of the valve it is necessary to employ powerful actuators.

Additionally, in the near closed position of the valve, the static and hydrodynamic forces on the rotatable element may produce a torque on the operating shaft which tends to drive the valve to the shut position, thus preventing stable and smooth operation of the valve at the near closed position.

FR—A—2 244 951 discloses a rotary control valve comprising a valve body with a fluid flow passageway with an annular seating surface, and a rotary valve component for opening and closing the passageway to fluid flow. In the valve illustrated in the drawings accompanying FR—A—2 244 951 the rotary valve component is illustrated as comprising a generally circular plate having two symmetrically disposed flow modifying portions each in the form of a quarter of a spherical shell provided on opposite side of the plate. The surfaces of the shells lie on a notional common sphere, and each shell is penetrated by a plurality of fluid flow passageways. The rotary valve component is rotatable by means of a spindle passing through the component. In the closed position of the valve, the peripheral edges of the plate of the rotary valve component engage against the valve seat. As the valve is opened, the surfaces of the shells move over the seat and allow fluid to flow through the orifices.

According to the present invention there is provided a rotary control valve comprising a valve body having a fluid flow passageway with an annular seating surface and a rotary valve element for opening and closing said passageway to fluid flow, said rotary valve element comprising a circular plate having two symmetrical skirts projecting transversely from opposite faces of the plate, said skirts being such that:

(a) they each extend 180° around the circumference of the respective face;

(b) they are displaced 180° from each other around the plate such that the ends of the two skirts lie on a common diameter of the plate;

(c) they have a maximum height midway between their ends and taper in height to the level of the face at their ends;

(d) their outer surfaces lie on a notional common sphere with a diameter substantially equal to that of the seating surface; and

(e) they are each penetrated by a plurality of fluid flow orifices which in the closed position of the rotary valve element are transverse to the direction of fluid flow, said plate being mounted for pivotal movement on a spindle extending parallel to the common diameter whereby in the closed position of the rotary valve element the outer edge thereof engages said seating surface to close said passageway to fluid flow and as the rotary valve element opens the said outer surfaces of the said skirts initially remain in contact with said seating surface whilst said orifices progressively open to fluid flow past the seat, the maximum height of the skirts being such that beyond a maximum predetermined angle of opening of the rotary valve element there is a clearance between the skirts and the seating surface whereby fluid flow can by-pass the orifices, characterised in that the spindle is off-set from the plate, that the orifices in that skirt on the same side of the plate as the spindle extend radially with respect to the mid-point of the spindle and that the orifices in the skirt on the opposite side of the plate to the spindle extend radially from the point which is the mirror image of said mid-point with respect to the plate.

Preferably at least one diffuser element is provided downstream of the rotary valve element. Such diffuser elements may comprise apertured plates. Where more than one such diffuser element is provided, they are preferably arranged with the apertures in adjacent plates being in staggered relationship.

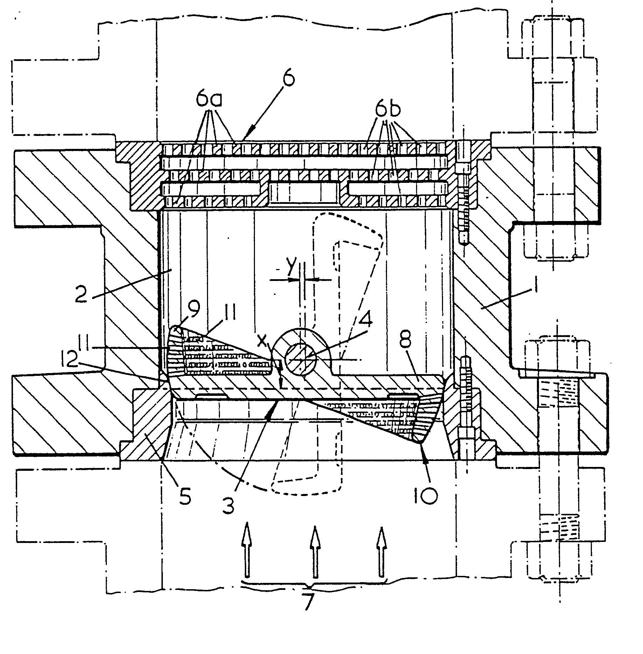

The invention will be further described by way of example only with reference to the accompanying drawing showing a sectional view of one embodiment of rotary control valve in accordance with the invention.

The illustrated valve comprises a body 1 with an internal bore 2 within which is located a rotatable element 3 mounted on an operating shaft 4. Mounted on the body 1 within the bore 2 is an annular seating ring 5 on which the elements 3 will seat. Additionally, a diffuser element 6 is mounted within the bore 2 downstream of the element 3 in the direction of fluid flow (arrows 7) through the valve.

Rotatable element 3 is comprised of a generally circular plate 8 with integral skirts 9, 10 one on each side of the plate 8 and projecting substantially perpendicularly therefrom. Each skirt 9,

10 extends in a semi-circle around the periphery of plate 8 with the ends of each skirt 9, 10 being located on a common diameter of plate 8 parallel to the axis of shaft 4 such that skirts 9 and 10 are spaced 180° degrees from each other around plate 8. The skirts 9, 10 are symmetrically disposed on the plate 8 and each rises uniformly in height from the ends of said diameter to a point of 90° from said ends, as clearly illustrated in the drawing.

The outer walls of skirts 9 and 10 are shaped so as to lie on a common sphere.

Penetrating the skirts 9 and 10 are a plurality of radially extending apertures 11 of size and spacing required to confer the required flow-rate characteristic (i.e. flow rate vs operating shaft position for a normalised differential pressure across the valve) near the closed position of the valve. The function of the apertures 11 is to dissipate the energy of the fluid stream with minimum generation of sonic energy. To meet this requirement it is desirable that the axial lengths of the apertures 11 are longer than the diameter of their equivalent circular areas.

Seating ring 5, which may be produced of a corrosion or erosion resistant material is shaped to provide a tight shut-off condition for the valve and to provide, in conjunction with the spatial arrangement of the apertures 11 in rotatable element 3, the desired flow rate characteristic for the valve. The seating ring 5 has a spherical surface 12 adapted to provide a mating surface with the outer spherical surface of skirts 9 and 10, when the rotatable element 3 is in the closed position (i.e. the position shown in solid lines in the drawings). The line of contact between the mating surfaces of ring 5 and element 3, when the latter is in the closed position, lies in a plane located at a distance x axially upstream of the centre line of shaft 4. Additionally the centre shaft 4 is off-set by a distance y from the centre of plate 8. Preferably y is from 1 to 5% of the diameter of element 3. By suitable choice of the values of x and y the element 3 reaches the closed position with an interference fit between the periphery of rotatable element 3 and the seating ring 5.

The illustrated diffuser element 6 comprises three axially spaced plates *6a* each having a plurality of apertures *6b* and with the apertures 6b in adjacent plates being staggered relationships. The spaces between the plates 6a provide cavities which allow fluid jets issuing from the apertures 6b to react upon each other by expansion, dispersion or turbulence thus providing controlled energy dissipation.

The operation of the valve will now be described.

With the rotatable element 3 in the closed position, the interference fit between element 3 and seating ring 5 ensures a tight shut-off and low or no fluid leakage.

As the operating shaft 4 is rotated, the rotatable element 3 is moved from its seating ring 5 and the total effective area for the passage of the fluid increases as an increasing number of apertures 11 become available to contribute to the flow rate from the upstream to the downstream side of the valve. It should at this point be appreciated that, for a given opening of the element 3, the number and spacing of the apertures 11 determines the total effective area for the valve opening. Consequently by modifying this number and spacing the valve may have any required characteristic.

Beyond a predetermined angle of opening (depending on the dimensions of skirts 9, 10) and to the fully open position, the fluid flow can by-pass the apertures 11 which, with increasing rotation of element 3, have a decreasing role in the control of the total flow rate. .

The function of the diffuser element 6 during operation of the valve is to dissipate the energy in the flow stream and thus reduce noise generation at valve openings where the apertures 11 are less effective.

The presence of the two skirts 9 and 10 on the rotatable element 3 ensures a significant reduction in the peak value of the hydrodynamically produced torque, as compared to the case when skirts 9 and 10 are absent. The actuators used for operating the illustrated valve may thus be smaller and cheaper than those conventionally employed.

Additionally since the axis of the shaft 4 is displaced the small distance y from the diametral axis of the rotatable element 3, the static forces created by virtue of the pressure differential across the two unequal areas of the rotatable element 3 on each side of the operating shaft 5 cause unequal torques and the net difference provides a small torque which tends to resist valve closure. This torque thus stabilises the operation of the valve in the nearly closed position.

It will thus be appreciated that the illustrated valve ensures a number of advantages, including:

maintenance of low noise emission at all degrees of opening and not only at the nearly closed position;

the peak hydrodynamic forces on the rotatable element are minimised, and thus the torque required to operate the valve is minimised;

there is stable and progressively smooth operation in the nearly closed position of the valve;

there is tight closure of the valve and minimum leakage;

the characteristic of the valve in the nearly closed position can be predetermined; and manufacture is simple.

## Claims

1. A rotary control valve comprising a valve body (1) having a fluid flow passageway (2) with an annular seating surface and a rotary valve element (3) for opening and closing said passageway to fluid flow, said rotary valve element (3) comprising a circular plate (8) having two symmetrical skirts (9, 10) projecting transversley from opposite faces of the plate (8), said skirts being such that:

(a) they each extend 180° around the circumference of the respective face;

(b) they are displaced 180° from each other around the plate such that the ends of the two skirts lie on a common diameter of the plate;

(c) they have maximum height midway between their ends and taper in height to the level of the face at their ends;

(d) their outer surfaces lie on a notional common sphere with a diameter substantially equal to that of the seating surface: and

(e) they are each penetrated by a plurality of fluid flow orifices (11) which in the closed position of the rotary valve element are transverse to the direction of the fluid flow, said plate (8) being mounted for pivotal movement on a spindle (4) extending parallel to the common diameter whereby in the closed position of the rotary valve element (3) the outer edge thereof engages said seating surface to close said passageway (2) to fluid flow and as the rotary valve element (3) opens the said outer surfaces of the said skirts initially remain in contact with said seating surface whilst said orifices (11) progressively open to fluid flow past the seat, the maximum height of the skirts (9, 10) being such that beyond a maximum predetermined angle of opening of the rotary valve element (3) there is a clearance between the skirts (9, 10) and the seating surface whereby fluid flow can by-pass the orifices (11), characterised in that the spindle (4) is off-set from the plate, that the orifices (11) in that skirt (9) on the same side of the plate (8) as the spindle (4) extend radially with respect to the mid-point of the spindle (4) and that the orifices (11) in the skirt (10) on the opposite side of the plate (8) to the spindle (4) extend radially from the point which is the mirror image of said mid-point with respect to the plate (8).

2. A valve as claimed in claim 1 wherein, in its closed position, the rotary valve element (3) seats on a ring (5) with a spherical surface.

3. A valve as claimed in claims 1 or 2 wherein at least one diffuser element (6) is provided downstream of the rotary valve element (3).

4. A valve as claimed in claim 3 wherein the or each diffuser element (6) is an aperture plate (6a).

5. A valve as claimed in claim 4 wherein a plurality of apertured plates (6a) are provided and they are arranged with the apertures in adjacent plates in a staggered relationship.

## Patentansprüche

1. Schwenkbares Steuerventil, umfassend einen Ventilkörper (1) mit einem Fluidströmungs-Durchflußkanal (2) mit einer ringförmigen Sitzfläche sowie ein schwenkbares Ventilelement (3) zum Öffnen und Schließen des Durchflußkanals für die Fluidströmung, wobei das schwenkbare Ventilelement (3) eine kreisförmige Platte (8) mit zwei symmetrischen Randbereichen (9, 10) aufweist, die von gegenüberliegenden Seiten der Platte (8) vorstehen, wobei die Randbereiche so ausgebildet sind, daß

(a) sie sich jeweils über 180° um den Umfang der jeweiligen Seite erstrecken,

(b) sie um 180° voneinander um die Platte versetzt sind, so daß die Enden der beiden Randbereiche auf einem gemeinsamen Durchmesser der Platte liegen,

(c) sie ihre maximale Höhe in der Mitte zwischen ihren Enden haben und sich in der Höhe zu dem Niveau der Fläche an ihren Enden verjüngen,

(d) ihre Außenoberfläche auf einer fiktiven gemeinsamen Kugel mit einem Durchmesser liegen, der im wesentlichen gleich dem der Sitzoberfläche ist, und

(e) sie jeweils von einer Vielzahl von Fluidströmungsöffnungen (11) durchdrungen sind, die in der Schließstellung des schwenkbaren Ventilelementes quer zur Richtung der Fluidströmung liegen, wobei die Platte (8) für eine Schwenkbewegung auf einer Spindel (4) montiert ist, die sich parallel zum gemeinsamen Durchmesser erstreckt, so daß in der Schließstellung des schwenkbaren Ventilelementes (3) seine Außenkante mit der Sitzoberfläche in Eingriff steht, um den Durchflußkanal (2) für die Fluidströmung zu schließen, und wenn das schwenkbare Ventilelement (3) öffnet, bleiben die Außenoberfläche der Randbereich zu Beginn in Kontakt mit der Sitzoberfläche, während die Öffnungen (11) fortschreitend für die Fluidströmung vorbei an dem Sitz öffnen, wobei die maximale Höhe der Randbereiche (9, 10) so gewählt ist, daß jenseits eines maximalen vorgegebenen Öffnungswinkels des schwenkbaren Ventilelementes (3) ein Abstand zwischen den Randbereichen (9, 10) und der Sitzoberfläche vorhanden ist, so daß die Fluidströmung um die Öffnungen (11) herumfließen kann, dadurch gekennzeichnet, daß die Spindle (4) gegenüber der Platte versetzt ist, daß die Öffnungen (11) in dem Randbereich (9) auf derselben Seite der Platte (8) wie die Spindle (4) bezüglich des Mittelpunktes der Spindle (4) radial verlaufen, und daß die Öffnungen (11) in dem Randbereich (10) auf der gegenüberliegenden Seite der Platte (8) zur Spindle (4) radial von dem Punkt aus verlaufen, der das Spiegelbild des Mittelpunktes bezüglich der Platte (8) ist.

2. Ventil nach Anspruch 1, wobei das schwenkbare Ventilelement (3) in seiner Schließstellung auf einem Ring (5) mit einer sphärischen Oberfläche sitzt.

3. Ventil nach Anspruch 1 oder 2, wobei mindestens ein Verteilerelement (6) stromabwärts von dem schwenkbaren Ventilelement (3) vorgesehen ist.

4. Ventil nach Anspruch 3, wobei das oder jedes Verteilerelement (6) eine mit Öffnungen versehene Platte (6a) ist.

5. Ventil nach Anspruch 4, wobei eine Vielzahl von mit Öffnungen versehenen Platten (6a) vorgesehen und sie mit den Öffnungen in benachbarten Platten in einer versetzten Relation angeordnet sind.

## Revendications

1. Vanne de régulation rotative comprenant un corps de vanne (1) comprenant un passage (2) pour l'écoulement du fluide, avec une surface de siège annulaire et un élément (3) de vanne rotative pour ouvrir et fermer ledit passage pour l'écoulement du fluide fledit élément (3) de vanne rotative comprenant une plaque circulaire (8) comprenant deux jupes symétriques (9, 10) faisant saillie transversalement depuis les faces opposées de la plaque (8), lesdites jupes étant telles que:

(a) elles s'étendent toutes deux à 180° autour de la circonférence de la face respective;

(b) elles sont décalées de 180° l'une par rapport à l'autre autour de la plaque, de telle façon que les extrémités des deux jupes reposent sur un diamètre commun de la plaque;

(c) elles présentent une hauteur maximale à mi-distance entre leurs extrêmités et sont effiliées en hauteur jusqu'au niveau de la face à leurs extrémités;

(d) leurs surfaces extérieures reposent sur une sphère imaginaire commune ayant un diamètre pratiquement égal à celui de la surface de siège; et

(e) dans chacune d'élles pénètrent une pluralité d'orifices (11) d'écoulement de fluide qui, dans la position fermée de l'élément de vanne rotative s'étendent transversalement au sens d'écoulement du fluide, ladite plaque (8) étant montée en pivotement sur une broche (4) s'étendant parallèlement au diamètre commun, en conséquence de quoi, dans la position fermée de l'élément (3) de vanne rotative, son bord extérieur entre en liaison mécanique avec ladite surface de siège pour fermer ledit passage (2) à l'écoulement du fluide et lorsque l'élément de vanne rotative (3) s'ouvre, lesdites surface extérieures desdites jupes demeurent initialement en contact avec ladite surface de siège tandis que lesdits orifices (11) s'ouvrent progressivement à l'écoulement du fluide après le siège, la hauteur maximale des jupes (9, 10) étant telle qu'au delà d'un angle maximal prédéterminé d'ouverture de l'élément de vanne rotative (3), il existe un espace entre les jupes (9, 10) et la surface de siège, par suite de quoi l'écoulement du fluide peute bipasser les orifices (11), caractérisé en ce que la broche (4) est décalée par rapport à la plaque, que les orifices (11) de la jupe (9), sur la même face de la plaque (8) que la broche (4), s'étendent radialement par rapport au point médian de la broche (4) et que les orifices (11) de la jupe (10) sur la face opposée de la plaque (8) par rapport à la broche (4) s'étendent radialement depuis le point qui est le point symétrique dudit point médian par rapport à la plaque (8).

2. Vanne selon la revendication 1, dans laquelle, dans sa position fermé, l'élément de vanne rotative (2) repose sur un anneau (5) avec une surface sphérique.

3. Vanne selon la revendication 1 ou 2, dans laquelle un élément diffuseur (6) est prévu en aval de l'élément de vanne rotative (3).

4. Vanne rotative selon la revendication 3, dans laquelle le ou chaque élément diffuseur (6) est une plaque perforée (6a).

5. Vanne rotative selon la revendication 4, dans laquelle une pluralité de plaques perforées (6a) sont prévues, les orifices des plaques adjacentes étant disposées en quinconce par rapport aux précédentes.